# FASCICULE DE BREVET EUROPEEN

(11) **EP 2 322 782 B1**
(45) Date de publication et mention de la délivrance du brevet: **18.01.2012**
(21) Numéro de dépôt: 10013579.7
(22) Date de dépôt: 13.10.2010
(51) Int. Cl.: F02C 7/052, F02C 7/055, F02C 7/057, B64D 33/02

(54) **Entrée d'air d'un turbomoteur d'aéronef, aéronef muni d'une telle entrée d'air et procédé pour optimiser le fonctionnement d'un turbomoteur d'un aéronef à l'aide d'une entrée d'air**
Lufteinlass eines Flug-TL-Triebwerks, Flugzeuge mit solchen Lufteinlass und Verfahren zur Optimierung des Betriebs eines das Flug-TL-Triebwerks mit einem solchen Lufteinlass
Air intake of a turbine aircraft engine, aircraft equipped with such air intake and method for optimizing the operation of a turbine aircraft engine with an air intake

(30) Priorité: 12.11.2009 FR 0905435
(43) Date de publication de la demande: 18.05.2011
(73) Titulaire: EUROCOPTER, 13725 Marignane Cédex (FR)
(72) Inventeur: Colaprisco, Marc, 13180 Gignac-La-Nerthe (FR); Gerin-Roze, Victor, 13510 Eguilles (FR)
(74) Mandataire: Pouillot, Laurent Pierre Paul

(56) Documents cités:
- FR-A1- 2 250 671
- FR-A1- 2 906 569
- GB-A- 710 946
- GB-A- 820 366
- US-A- 3 449 891
- US-A- 5 697 394

## Description

La présente invention concerne une entrée d'air d'un turbomoteur d'aéronef, par exemple d'un giravion, un aéronef muni d'une telle entrée d'air et un procédé pour optimiser le fonctionnement d'un turbomoteur d'un aéronef à l'aide d'une entrée d'air.

En particulier, les giravions étant amenés à fonctionner dans des environnements variés et dans des conditions extrêmes, le ou les turbomoteurs de ce giravion doivent être protégés pour supporter de telles conditions.

En effet, pour alimenter un turbomoteur de giravion en air, on équipe ce turbomoteur d'une entrée d'air, cette entrée d'air étant pourvue d'un conduit reliant le turbomoteur à l'air extérieur. On distingue deux types d'entrée d'air, à savoir :
- une entrée d'air dynamique alimentée en air extérieur sous l'effet d'une part de la vitesse d'avancement de l'aéronef et, d'autre part, de l'aspiration requise par le turbomoteur, et
- une entrée d'air statique uniquement alimentée en air sous l'effet de l'aspiration requise par le turbomoteur.

Pour éviter l'ingestion par le turbomoteur de corps solides susceptibles de l'endommager, des oiseaux par exemple, il est courant de protéger une entrée d'air à l'aide d'une grille. Lesdits corps solides sont alors bloqués par la grille et ne risquent pas de pénétrer à l'intérieur du turbomoteur.

Bien qu'efficace, cette solution présente un inconvénient dans des conditions de vol dites givrantes, et plus particulièrement pour les entrées d'air dynamiques. Dans de telles conditions de vol, le givre se dépose sur la grille et obture de fait partiellement, voire même totalement, les interstices de cette grille.

Par suite, l'entrée d'air est partiellement voire totalement obturée ce qui implique une baisse importante, voire totale, de la puissance développée par ce turbomoteur.

Pour y remédier, il est alors concevable d'utiliser une grille surdimensionnée. L'entrée d'air dynamique comportant une surface de passage par laquelle l'air pénètre dynamiquement dans l'entrée d'air dynamique, la grille de protection comporte une première et une deuxième sections de passage de l'air, la première section de passage étant en regard de la surface de passage contrairement à la deuxième section de passage. De façon imagée, la grille est une sorte de chapeau de champignon venant recouvrir l'entrée d'air dynamique.

Ainsi, seule la première section de passage est susceptible de capter le givre. En conditions givrantes, la deuxième section de passage garantit alors un débit d'air minimum.

Une telle grille surdimensionnée ne manque pas d'ingéniosité. Cependant, on constate que le dimensionnement de la grille est délicat. De plus, la grille surdimensionnée possède des caractéristiques géométriques pénalisantes d'un point de vue aérodynamique, d'autant plus que ces caractéristiques ne sont justifiées que durant des conditions de vol extrêmes.

Par ailleurs, les pilotes de l'aéronef n'ont à priori pas de moyens pour estimer le colmatage de la première section de passage de la grille surdimensionnée, et donc aucun moyen pour décider de mettre fin à leur mission pour cause de givrage avancé.

On note que les constructeurs d'aéronefs ont donc conçu des dispositifs pour protéger les entrées d'air des turbomoteurs de manière à empêcher l'ingestion de particules de tout type par ces turbomoteurs. Par exemple, on connaît alors par le document FR2250671 une entrée d'air polyvalente pouvant d'une part éviter l'ingestion de particules par le turbomoteur et, d'autre part, autoriser un vol en conditions givrantes sans avoir des dégradations de performances importantes du turbomoteur.

Cette entrée d'air polyvalente comporte une entrée d'air dynamique de forme annulaire formant un divergent pouvant être obturé par une ogive qui se déplace axialement. De plus l'entrée d'air polyvalente est munie d'une entrée filtrante cylindrique, située en aval de l'entrée dynamique par rapport à l'écoulement de l'air, qui est pourvue d'une pluralité de filtres à particules agissant par inertie sur sa périphérie externe. Lorsque les fonctions antigivrage ou anti-sable sont activées, l'ogive obture l'entrée d'air dynamique de manière à ce que la totalité de l'air ingéré par le turbomoteur traverse l'entrée filtrante, et plus particulièrement les filtres à particules.

Ces derniers sont munis d'une rampe hélicoïdale qui anime l'air d'un mouvement tourbillonnaire avant de pénétrer à l'intérieur d'un tube dont la sortie est munie d'un séparateur, concentrique au tube mais ayant un diamètre inférieur à ce dernier. Compte tenu du mouvement tourbillonnaire provoqué par la rampe hélicoïdale, on observe un phénomène de vortex à l'entrée de chaque filtre à particules. La glace est alors entraînée vers la périphérie de ce vortex et se dépose finalement sur l'entrée filtrante, plus précisément sur l'arête extérieure de chaque filtre à particules, sans l'obturer. Ainsi, l'entrée filtrante empêche l'absorption de glace dans le turbomoteur.

En ce qui concerne le mode de fonctionnement anti-sable, suite au mouvement d'air tourbillonnaire, les particules sont projetées contre les parois du tube, et ne peuvent par conséquent pas pénétrer à l'intérieur du séparateur qui alimente finalement le turbomoteur. De plus, un ventilateur se charge de l'extraction des particules qui n'ont pas pu traverser le séparateur en étant projetées contre les parois du tube.

Les documents FR1585516 et FR1548724, prévoyant tous deux la mise en oeuvre de filtres à particules, décrivent un dispositif similaire.

Par ailleurs, parmi l'état de la technique éloigné de l'invention, on cite le document FR 2924471 qui présente notamment un moyen de filtrage compressible, le document EP 0075054 qui utilise un élément filtrant pivotant, ou encore les documents GB577799, WO 9705942 et FR2538453.

La présente invention a pour objet de proposer une entrée d'air polyvalente permettant de s'affranchir des limitations mentionnées ci-dessus, en autorisant notamment les vols en conditions givrantes sans avoir besoin d'implémenter un turbomoteur surdimensionné sur un aéronef bimoteur.

La présente invention a alors pour objet de proposer une entrée d'air alternative simple et bon marché apte à fonctionner en conditions givrantes, tout en permettant éventuellement d'informer un pilote que les conditions de vol sont givrantes.

Selon l'invention, une entrée d'air d'un turbomoteur d'aéronef comporte un conduit d'acheminement d'air délimité par une paroi latérale, le conduit d'acheminement d'air étant prolongé par un conduit d'entrée dynamique, le conduit d'entrée dynamique s'étendant selon un axe dynamique du conduit d'acheminement vers une section de passage frontale par laquelle un vent apparent peut pénétrer dans l'entrée d'air, l'axe dynamique étant apte à être sensiblement parallèle à un axe longitudinal de l'aéronef, le conduit d'entrée dynamique étant pourvu d'une grille de protection contre l'ingestion de corps extérieurs.

Le conduit d'entrée est dit dynamique dans la mesure où le vent apparent peut y pénétrer sans aide extérieure lorsque l'entrée d'air est agencée sur un aéronef, un giravion notamment.

On rappelle que le vent dénommé « vent réel » est le vent ressenti par un corps immobile. A l'inverse, le vent dénommé « vent vitesse » ou plus couramment « vent relatif » et le vent ressenti par un corps lors de son déplacement. Le vent apparent est la somme vectoriel du vent réel et du vent relatif.

La grille sépare alors longitudinalement le conduit d'entrée dynamique en deux portions, une portion amont et une portion aval par exemple. Les termes amont et aval se référent alors au sens de passage de l'air au travers du conduit d'entrée dynamique. Classiquement, la grille est un treillis, par exemple métallique.

L'entrée d'air est notamment remarquable en ce que, la grille étant apte à effectuer une translation selon l'axe dynamique par rapport à la section de passage frontale, cette entrée d'air comporte au moins une entrée latérale ménagée dans la paroi latérale du conduit d'acheminement et un moyen d'obturation de ladite entrée latérale qui est de surcroît mobile par rapport à cette entrée latérale, l'entrée d'air comportant un moyen de déplacement commandé par la translation de la grille pour requérir un déplacement du moyen d'obturation par rapport à l'entrée latérale.

Lorsque la grille n'est pas colmatée, chaque moyen d'obturation obture totalement l'entrée latérale correspondante.

Par contre lorsque la grille est au moins partiellement colmatée sous l'effet du givre par exemple, la grille effectue une translation dans le conduit d'acheminement. Plus précisément, la grille s'éloigne de la section de passage frontale. Cette translation entraîne un déplacement du moyen d'obturation via le moyen de déplacement. Dès lors, le premier flux d'air entrant par la section de passage frontale est réduit du fait de l'obturation partielle ou totale de la grille. Cependant, cette réduction du premier flux d'air est compensée par l'ouverture totale ou partielle de l'entrée latérale, un deuxième flux d'air entrant dans le conduit d'acheminement via l'entrée latérale.

On note que la grille s'éloigne de la section de passage frontale d'une part du fait de la pression exercée par le vent apparent sur la grille lorsqu'elle est colmatée, et d'autre part du fait de l'aspiration provoquée par le turbomoteur. De même, l'entrée latérale présentant une angulation avec la section de passage frontale, l'air pénètre dans le conduit d'acheminement via l'entrée latérale en étant aspiré par le turbomoteur, voire dynamiquement si l'entrée latérale n'est pas parallèle au vent apparent.

L'entrée d'air peut de plus comporter une ou plusieurs des caractéristiques qui suivent.

Ainsi, l'entrée latérale définissant la section de passage latérale apte à laisser pénétrer de l'air à l'intérieur du conduit d'acheminement, le moyen de déplacement déplace le moyen d'obturation pour ajuster une surface couverte par la section de passage latérale afin de contrôler un débit d'air traversant l'entrée latérale en fonction du colmatage de la grille, le débit d'air étant maintenu entre un débit d'air nul et un débit d'air maximal prédéterminé.

Le moyen de déplacement, une plaque par exemple, ouvre l'entrée latérale en fonction des besoins du turbomoteur à alimenter. Ainsi l'entrée latérale est totalement ouverte lorsque la grille est totalement colmatée afin de fournir le débit d'air maximal, alors que l'entrée latérale est totalement fermée lorsque la grille n'est pas du tout colmatée.

De plus, l'entrée d'air comporte éventuellement un premier moyen de guidage en translation de la grille selon l'axe dynamique dans le conduit d'entrée. Par exemple, le premier moyen de guidage comporte des rails disposés sur la périphérie interne du conduit d'entrée dynamique.

Par ailleurs, il est concevable de prévoir un premier moyen de chauffage électrique de la grille pour limiter le givrage de cette grille. Le moyen de chauffage peut aussi consister en une prise d'air chaud, cet air chaud étant prélevé sur le turbomoteur par exemple, ou encore en un chauffage électrique

De surcroît, le chauffage peut être à puissance variable en étant plus important à la périphérie de la grille plutôt qu'au centre de la grille. Lorsque l'entrée d'air comporte un premier moyen de guidage en translation qui coopère avec la périphérie de la grille, un tel moyen de chauffage permet d'éviter en conditions givrantes un collage de la grille au moyen de guidage.

De même, le moyen d'obturation étant apte à se déplacer par rapport à l'entrée latérale, l'entrée d'air comporte un deuxième moyen de guidage du moyen d'obturation.

On note que l'entrée d'air peut comprendre un deuxième moyen de chauffage des premier et/ ou deuxième moyens de guidage pour éviter un blocage des déplacements de la grille et/ ou du moyen d'obturation dû au givre. Le deuxième moyen de chauffage peut consister en une prise d'air chaud, cet air chaud étant prélevé sur le turbomoteur par exemple, ou encore en un chauffage électrique.

Selon un premier mode de réalisation mécanique, le moyen de déplacement comporte une liaison mécanique reliant la grille au moyen d'obturation.

Conformément à un premier exemple, la liaison mécanique est un barreau solidaire de la grille et du moyen d'obturation, ce barreau étant optionnellement agencé selon un axe parallèle à l'axe dynamique.

Ainsi, lorsque la grille effectue une translation, le moyen de déplacement entraîne en translation le moyen d'obturation qui libère alors l'entrée latérale.

Le moyen d'obturation est donc une trappe coulissante selon ce premier exemple du premier mode de réalisation mécanique.

Conformément à un deuxième exemple, la liaison mécanique est un barreau solidaire de la grille et articulé par un guignol au moyen d'obturation. Ainsi, lorsque la grille effectue une translation, le moyen de déplacement entraîne non pas une translation mais une rotation du moyen d'obturation qui libère alors l'entrée latérale.

Le moyen d'obturation est donc une trappe basculante selon ce deuxième exemple du premier mode de réalisation mécanique.

Optionnellement, l'entrée d'air comporte un capteur de position apte à envoyer une information relative à la position de la grille dans le conduit d'entrée dynamique. Par la position de la grille, il est possible d'en déduire via un étalonnage préalable le niveau de colmatage de la grille pour en informer le pilote par exemple.

La position de la grille peut être définie par rapport à la section de passage frontale par exemple. On note que le capteur de position est un capteur de position usuel. Par exemple, le capteur de position est un capteur de type potentiomètre, à inductance variable ou encore à ultrasons.

Selon un deuxième mode de réalisation électrique, l'entrée d'air comportant un capteur de position apte à envoyer une information relative à la position de la grille dans ledit conduit d'entrée dynamique, tel qu'un capteur de position usuel, le moyen de déplacement comporte un premier processeur recevant ladite information ainsi qu'un moteur de déplacement apte à déplacer le moyen d'obturation, le premier processeur ajustant la position du moyen d'obturation par rapport à l'entrée latérale en commandant le moteur de déplacement en fonction de ladite information.

A titre d'exemple, le moteur de déplacement est lié au moyen d'obturation par une vis sans fin. Lorsque le premier processeur détecte une translation de la grille, il commande le moteur de déplacement qui génère une rotation de la vis sans fin pour faire coulisser ou basculer le moyen d'obturation selon la variante choisie.

Le premier processeur peut faire appel à une mémoire externe possédant une loi donnant la position du moyen d'obturation en fonction de la position de la grille, ou encore posséder en son sein ladite mémoire.

Ainsi l'invention peut être réalisée selon un mode mécanique ou un mode électrique, chaque mode pouvant être décliné en une variante impliquant un coulissement du moyen d'obturation ou encore en une variante impliquant une rotation du moyen d'obturation.

Par ailleurs, l'entrée d'air comportant un capteur de position apte à envoyer une information relative à la position de ladite grille dans ledit conduit d'entrée dynamique, cette entrée d'air peut être pourvue d'un moyen de gestion qui accomplit au moins une des actions suivantes :
- ladite grille étant chauffée par un premier moyen de chauffage, ledit moyen de gestion contrôle ledit premier moyen de chauffage en fonction de ladite information,
- la grille étant guidée par un premier moyen de guidage et/ ou le moyen d'obturation étant guidé par un deuxième moyen de guidage, un deuxième moyen de chauffage chauffant ledit premier moyen de guidage et/ou ledit deuxième moyen de guidage, ledit moyen de gestion contrôle ledit deuxième moyen de chauffage en fonction de ladite information,
- le moyen de gestion détermine un niveau de colmatage de la grille en fonction de ladite information, et est apte à signaler le niveau de colmatage à un pilote de l'aéronef, ce pilote pouvant par exemple décider d'interrompre sa mission en fonction dudit niveau de colmatage,
- des profils de mission (missions de sauvetage, de transport de charges...) étant enregistrés dans un premier calculateur de l'aéronef, le moyen de gestion est apte à envoyer ladite information audit premier calculateur pour modifier lesdits profils en temps réel en vol en fonction du niveau de colmatage de la grille,
- un deuxième calculateur déterminant une puissance donnée que doit délivrer ledit turbomoteur à un régime donné, ledit moyen de gestion est apte à envoyer ladite information audit deuxième calculateur pour ajuster ladite puissance en fonction du colmatage de la grille.

A cet effet, le moyen de gestion peut comporter un deuxième processeur et une mémoire pour commander un premier moyen de chauffage de la grille, pour commander un deuxième moyen de chauffage de moyen de guidage de la grille et/ou du moyen d'obturation, pour modifier les profils de mission, ou encore pour buter le turbomoteur à une puissance donnée en fonction du colmatage de la grille.

En outre, l'entrée d'air comporte optionnellement au moins un moyen d'amortissement de la translation de la grille pour garantir que la translation de la grille est uniquement due à un colmatage de cette grille, et non pas à un vent apparent violent par exemple.

Le moyen d'amortissement peut comporter un ou plusieurs amortisseurs. L'amortisseur peut être un amortisseur passif, mettant par exemple en oeuvre un piston et un ressort taré voire un moyen élastique à base d'un matériau choisi dans le groupe des élastomères, ou un amortisseur actif dont la raideur varie en fonction de paramètres prédéterminés.

Ainsi, selon une première option, le moyen d'amortissement comporte un premier et un deuxième moyens d'amortissement en série ayant une première et une deuxième raideurs distinctes. Ainsi, on choisira éventuellement :
- un premier amortisseur lié à la grille ayant une raideur faible pour permettre une translation progressive de cette grille, puis
- un deuxième amortisseur lié audit premier amortisseur ayant une raideur importante pour éviter une translation de la grille sous l'effet du colmatage partiel ou total et pour permettre une absorption de l'énergie résultant d'un choc sur la grille, suite à l'impact d'un oiseau par exemple.

Selon une deuxième option compatible avec la première option, l'entrée d'air comporte un moyen d'ajustement de la raideur d'au moins un moyen d'amortissement en fonction de la phase de vol et/ou lorsqu'un corps percute la grille avec une force prédéterminée.

Le moyen d'amortissement peut comprendre notamment un amortisseur de type hydraulique, ou de type pneumatique, le moyen d'ajustement réglant la pression du fluide transmis en fonction de la situation.

De même, l'amortisseur peut être de type électrique.

Ainsi, Le moyen d'amortissement est un moyen actif, la commande d'ouverture de l'entrée latérale étant filtrée pour éviter des ouvertures parasites.

Une telle ouverture parasite peut par exemple résulter d'un choc de la grille avec un objet ou une rafale de vent. Un tel choc tend en effet à déplacer la grille et donc à ouvrir l'entrée latérale. Or, si la grille revient à sa position initiale après ledit choc, l'ouverture de l'entrée latérale n'est finalement pas nécessaire puisque l'écoulement dans l'entrée d'air sera revenu dans des conditions nominales après la perturbation.

Dès lors, en ajustant la raideur du moyen d'amortissement, on évite un déplacement non nécessaire, et finalement perturbateur. Par exemple, lorsque l'on détecte un choc, on augmente ponctuellement la raideur du moyen d'amortissement pour éviter une translation de la grille.

A cet effet, le moyen d'ajustement peut utiliser un capteur de position de la grille, dédié ou non, pour déterminer l'accélération de cette grille. Si cette accélération dépasse un seuil, on peut considérer qu'elle résulte d'un choc et non pas d'un givrage progressif. Dès lors, le moyen d'ajustement augmente la raideur du moyen d'amortisseur pour éviter l'ouverture de l'entrée latérale.

Selon une troisième option, n'excluant pas les première et deuxième options précédentes, si l'on applique le deuxième mode réalisation le moteur de déplacement peut être activé à partir :
- d'un déplacement de la grille sur une distance supérieure à une distance prédéterminée de la grille de l'ordre du centimètre, ou encore
- d'un déplacement de la grille se produisant durant une durée supérieure à une durée limite prédéterminée par exemple de l'ordre de la seconde.

Enfin, on note que l'envoi éventuel de l'information de colmatage de la grille au pilote pourra également être filtré en suivant le même principe.

Par ailleurs, l'entrée d'air est pourvue d'un élément déviateur sur ladite paroi latérale en amont de ladite entrée latérale apte à dévier un vent apparent et/ou à retenir les captations de givre en suspension dans l'air et qui aurait tendance à pénétrer par l'entrée d'air latérale.

Outre une entrée d'air, l'invention a pour objet un aéronef muni d'un turbomoteur, cet aéronef étant notamment remarquable en ce qu'il comporte une entrée d'air selon l'invention telle que décrite précédemment pour alimenter ledit turbomoteur avec de l'air.

Enfin, l'invention concerne aussi un procédé pour optimiser le fonctionnement d'un turbomoteur d'un aéronef à l'aide d'une entrée d'air comportant un conduit d'acheminement d'air délimité par une paroi latérale, le conduit d'acheminement d'air étant prolongé par un conduit d'entrée dynamique, le conduit d'entrée dynamique s'étendant selon un axe dynamique du conduit d'acheminement vers une section de passage frontale par laquelle un vent apparent peut pénétrer dans l'entrée d'air, l'axe dynamique étant apte à être sensiblement parallèle à un axe longitudinal de l'aéronef, le conduit d'entrée dynamique étant pourvue d'une grille de protection contre l'ingestion de corps extérieurs.

Cette entrée d'air est favorablement une entrée d'air telle que décrite précédemment.

Dès lors, au cours du procédé, ladite grille étant apte à effectuer une translation selon l'axe dynamique par rapport à la section de passage frontale suite à un colmatage de la grille, ladite entrée d'air comportant au moins une entrée latérale ménagée dans ladite paroi latérale et un moyen d'obturation de ladite entrée latérale mobile par rapport à cette entrée latérale, on déplace le moyen d'obturation par rapport à l'entrée latérale proportionnellement à la translation.

Optionnellement, on accomplit de plus au moins une des actions suivantes :
- ladite grille étant chauffée par un premier moyen de chauffage, on contrôle ledit premier moyen de chauffage en fonction de la position de ladite grille dans ledit conduit d'entrée dynamique par exemple en ajustant un courant électrique transmis à la grille par le premier moyen de chauffage en fonction de la position de ladite grille dans ledit conduit d'entrée dynamique,
- la grille étant guidée par un premier moyen de guidage et/ ou le moyen d'obturation étant guidé par un deuxième moyen de guidage, un deuxième moyen de chauffage chauffant ledit premier moyen de guidage et/ou ledit deuxième moyen de guidage, on contrôle ledit deuxième moyen de chauffage en fonction de la position de ladite grille dans ledit conduit d'entrée dynamique,
- on détermine un niveau de colmatage de la grille en fonction de la position de ladite grille dans ledit conduit d'entrée dynamique et on fournit ce niveau de colmatage à un pilote dudit aéronef,
- des profils de mission étant enregistrés dans un premier calculateur dudit aéronef, on envoie la position de ladite grille dans ledit conduit d'entrée dynamique audit premier calculateur pour modifier lesdits profils en temps réel en vol en fonction du colmatage de la grille,
- un deuxième calculateur déterminant une puissance donnée que doit délivrer ledit turbomoteur à un régime donné, on envoie la position de ladite grille dans ledit conduit d'entrée dynamique au deuxième calculateur pour ajuster ladite puissance en fonction du niveau de colmatage de la grille.

Ces actions peuvent être réalisées par des organes indépendant de l'entrée d'air qui reçoivent une information provenant d'un capteur de position de la grille, ou encore sont mises en oeuvre par un moyen de gestion de l'entrée d'air.

L'invention et ses avantages apparaîtront avec plus de détails dans le cadre de la description qui suit avec des exemples de réalisation donnés à titre illustratif en référence aux figures annexées qui représentent :
- la figure 1, un schéma montrant des entrées latérales obturées par des moyens d'obturation,
- la figure 2, un schéma montrant des entrées latérales partiellement obturées par des moyens d'obturation,
- la figure 3, un schéma montrant des entrées latérales qui ne sont pas obturées par des moyens d'obturation,
- la figure 4, un schéma présentant une première variante d'un premier mode de réalisation,
- la figure 5, un schéma présentant une deuxième variante d'un premier mode de réalisation, et
- la figure 6, un schéma présentant un deuxième mode de réalisation.

Les éléments présents dans plusieurs figures distinctes sont affectés d'une seule et même référence.

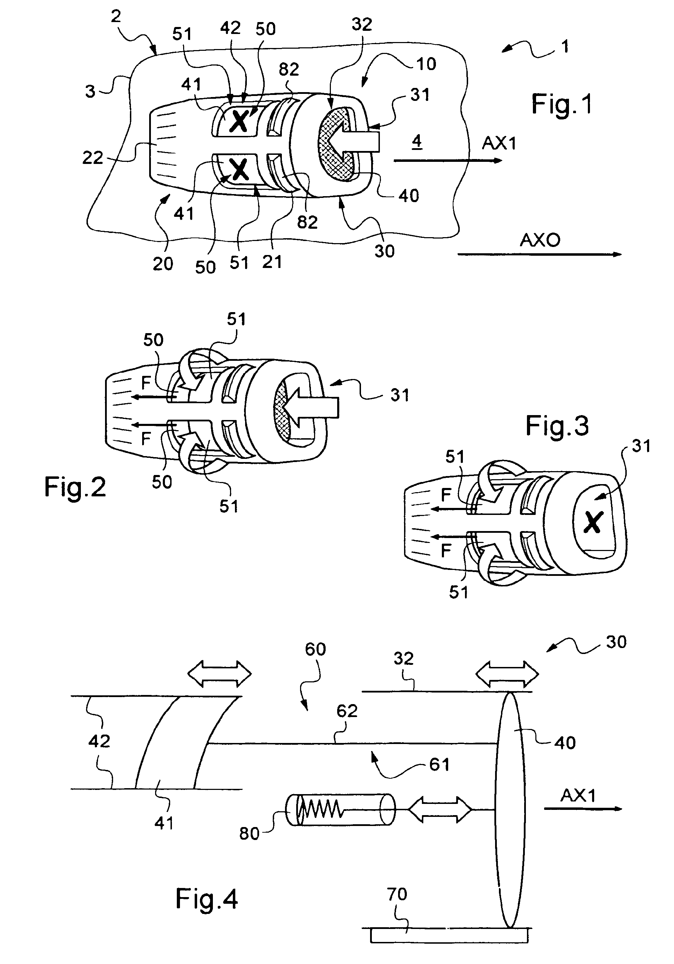

La figure 1 présente une entrée d'air 10 d'un turbomoteur 2 d'un aéronef 1. L'entrée d'air 10 est agencée sur le fuselage 3 de l'aéronef 1 pour alimenter en air le turbomoteur 2, disposé à l'intérieur du fuselage 3.

L'entrée d'air 10 comporte un conduit d'acheminement 20 d'air délimité par une paroi latérale 21, le conduit d'acheminement 20 étant alors un tunnel apte à diriger de l'air vers un turbomoteur 2. Le conduit d'acheminement comporte un coude 22 pour conduire l'air vers un plénum du turbomoteur. Néanmoins, on comprend que, pour alimenter un turbomoteur ayant une prise d'air axiale, le conduit d'acheminement peut être longiligne et se situer dans le prolongement de la prise d'air axiale.

Outre le conduit d'acheminement 20, l'entrée d'air 10 comporte un conduit d'entrée dynamique 30 prolongeant le conduit d'acheminement 20. Dès lors, le conduit d'entrée dynamique s'étend selon un axe dynamique AX1 du conduit d'acheminement 20 vers une section de passage frontale 31 de ce conduit d'entrée dynamique, l'axe dynamique AX1 parallèle à un axe longitudinal AX0 de l'aéronef reliant l'arrière à l'avant de cet aéronef 1.

La direction de l'axe dynamique AX1 permet au vent apparent 4 de pénétrer dans l'entrée d'air 10 par la section de passage frontale 31, sans avoir besoin d'être aspiré par le turbomoteur 2. Le conduit d'entrée 20 est dénommé conduit d'entrée dynamique dans la mesure où il permet de capter sans aide extérieure le vent apparent, et notamment le vent relatif.

Cette entrée d'air 10 et ingénieusement munie d'une grille 40 de protection contre l'ingestion de corps extérieurs, tels que des oiseaux ou encore de la glace par exemple. La grille 40 est alors positionnée à l'intérieur du conduit d'entrée dynamique 30 pour couvrir intégralement une section du tunnel formé par le conduit dynamique.

La grille 40, un treillis métallique par exemple, partage alors le conduit d'entré dynamique 30 en deux portions distinctes, une portion amont située entre la grille et la section de passage frontale 31 et une portion aval située entre la grille 40 et le conduit d'acheminement 20.

De plus, l'entrée d'air comporte au moins une entrée latérale 50 ménagée dans la paroi latérale 21 du conduit d'acheminement 20, en l'occurrence deux entrées latérales 50 sur la figure 1. Chaque entrée latérale est contenue dans un plan présentant une angulation par rapport à la section de passage frontale 31.

Chaque entrée latérale 50 définit alors une section de passage latérale 51 permettant à de l'air extérieur de pénétrer à l'intérieur de l'entrée d'air, par aspiration ou de par le mouvement de cet air relativement à l'entrée latérale le cas échéant. En effet, en fonction de ladite angulation, il est concevable que le vent relatif ne puisse pas pénétrer dans l'entrée d'air via l'entrée latérale 50.

D'ailleurs, l'entrée d'air peut comporter un élément déviateur 82 par entrée latérale pour dévier le vent apparent 4, afin d'éviter le dépôt de givre sur cette entrée latérale. Chaque élément déviateur 82 est par conséquent agencé sur la paroi latérale 21 en amont de l'entrée latérale associée.

Chaque entrée latérale, et plus précisément sa section de passage latérale, peut être partiellement ou totalement obturé par un moyen d'obturation 41 associé, telle qu'une plaque conformée à la section de passage latérale associée. On comprend donc que chaque moyen d'obturation 41 est mobile par rapport à l'entrée latérale 50 correspondante.

De même, la grille 40 est mobile par rapport au conduit d'entrée dynamique 30, par exemple par rapport à la section de passage frontale 31. Plus précisément, cette grille 40 est à même d'effectuer une translation selon ledit axe dynamique AX1. La grille 40 coulisse alors dans le conduit d'entrée dynamique 30 pour se rapprocher ou s'éloigner de la section de passage frontale 31.

Par suite, en conditions givrantes, il est possible que la grille 40 se colmate. La pression du vent apparent sur la grille 40 colmatée, associée à la dépression régnant dans l'entrée d'air du fait de l'aspiration du turbomoteur, entraîne un déplacement de la grille qui s'éloigne de la section de passage frontale 31.

Dès lors, selon l'invention on déplace le moyen d'obturation 41 par rapport à l'entrée latérale proportionnellement à la translation de la grille pour ouvrir totalement ou partiellement la section de passage latérale 51 de l'entrée latérale 50. On note que l'entrée d'air peut être équipée d'un premier et d'une deuxième moyens de guidage 32, 42 respectivement de la grille 40 et des moyens d'obturations 41 pour éviter un déplacement erratique de ces organes, voire un coincement en translation desdits organes.

En référence à la figure 1, si la grille 40 n'est pas colmatée, cette grille 40 se trouve au niveau de la section de passage frontale 31. Les moyens d'obturations 41 obturent alors les entrées latérales, l'obturation complète étant représentée par une croix X.

En effet, la grille 40 n'étant pas colmatée, le flux d'air traversant la section de passage frontale est suffisant pour couvrir les besoins du turbomoteur.

En référence à la figure 2, la grille 40 est partiellement colmatée ce qui explique que cette grille 40 a effectué un mouvement translatif pour s'éloigner de la section de passage frontale 31.

A l'instar de la grille 40, chaque moyen d'obturation a effectué un déplacement, en l'occurrence une translation selon un flèche F sur la figure 2, pour ouvrir partiellement l'entrée latérale 50 associée.

Le débit d'air entrant par la section de passage frontale 31 et par les sections de passage latérales partiellement obturées est alors suffisant pour couvrir les besoins du turbomoteur. Le colmatage partiel de la section de passage frontale 31 est en effet compensé par l'ouverture partielle des entrées latérales 50.

Enfin, en référence à la figure 3, la grille 40 est totalement colmatée. Le vent apparent ne peut alors plus pénétrer dans l'entrée d'air par la section de passage frontale 31.

Par contre, chaque moyen d'obturation a effectué un déplacement, en l'occurrence une translation selon un flèche F sur la figure 2, pour ouvrir totalement l'entrée latérale 50 associée.

Le débit d'air entrant par les sections de passage latérales partiellement obturées par aspiration est alors suffisant pour couvrir les besoins du turbomoteur. Le colmatage total de la section de passage frontale 31 est compensé par l'ouverture totale des entrées latérales 50.

Chaque moyen d'obturation ajuste alors la section de passage latérale 51 associée effective afin de contrôler le débit d'air passant par l'entrée latérale, ce débit d'air allant d'un débit d'air nul sur la figure 1 à un débit d'air maximal prédéterminé sur la figure 3. On note que ledit débit d'air maximal est avantageusement le débit d'air maximal requis par le turbomoteur.

Par ailleurs, l'invention peut comporter un capteur de position permettant de délivrer un signal électrique relatif à la position de la grille 40 dans le conduit d'entrée dynamique, par rapport à la section de passage frontale, ou encore par rapport à une position initiale de la grille avant colmatage. A l'aide de ce capteur de position, on peut notamment accomplir au moins une des actions suivantes :
- la grille 40 étant chauffée par un premier moyen de chauffage, on contrôle le premier moyen de chauffage en fonction de la position de ladite grille 40 dans ledit conduit d'entrée dynamique 30,
- le déplacement de la grille 40 étant guidé par un premier moyen de guidage et/ ou le déplacement du moyen d'obturation 41 étant guidé par un deuxième moyen de guidage, un deuxième moyen de chauffage chauffant ledit premier moyen de guidage et/ou ledit deuxième moyen de guidage, on contrôle le deuxième moyen de chauffage en fonction de la position de ladite grille 40 dans ledit conduit d'entrée dynamique 30,
- on détermine un niveau de colmatage de la grille en fonction de la position de ladite grille 40 dans le conduit d'entrée dynamique 30 et on fournit ce niveau de colmatage à un pilote de l'aéronef,
- des profils de mission étant enregistrés dans la mémoire d'un premier calculateur dudit aéronef 1, on envoie la position de la grille 40 dans ledit conduit d'entrée dynamique 30 au premier calculateur pour modifier lesdits profils en temps réel en vol en fonction du niveau de colmatage de la grille 40,
- un deuxième calculateur déterminant une puissance donnée que doit délivrer le turbomoteur à un régime donné, on envoie la position de ladite grille 40 dans le conduit d'entrée dynamique 30 au deuxième calculateur pour ajuster ladite puissance en fonction du niveau de colmatage de la grille 40.

Afin que les moyens d'obturations 41 et la grille 40 soient déplacés conjointement, l'entrée d'air comporte un moyen de déplacement commandé par la translation de la grille 40 pour requérir un déplacement des moyens d'obturations 41 relativement aux entrées latérales 50 associées.

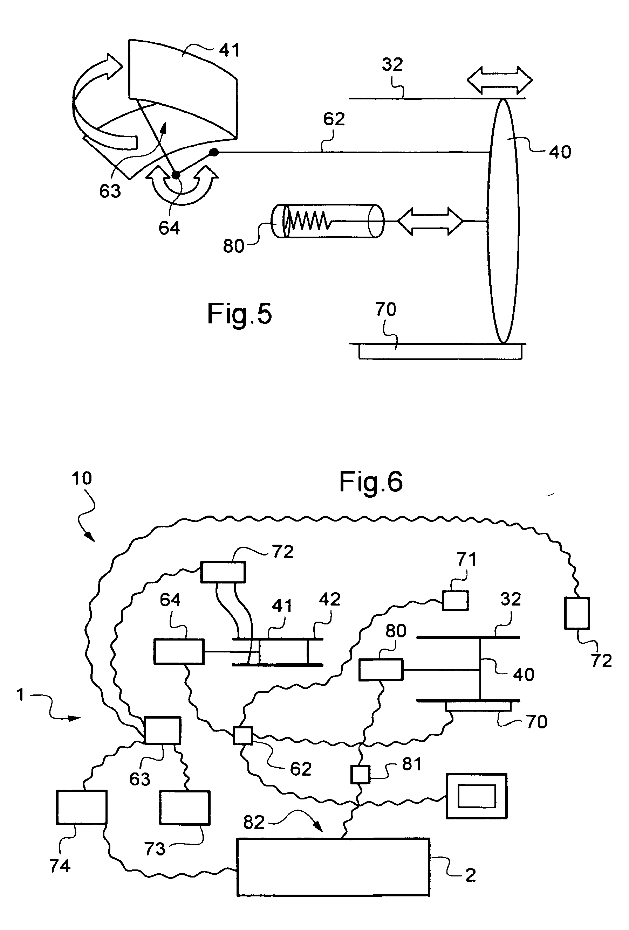

En référence aux figures 4 et 5, selon un premier mode de réalisation le moyen de déplacement 60 comporte une liaison mécanique 61 reliant mécaniquement et donc physiquement la grille 40 au moyen d'obturation 41. On comprend que si l'entrée d'air est munie d'une pluralité de moyens d'obturation, chaque moyen d'obturation est relié par sa propre liaison mécanique à la grille 40.

Selon le premier exemple de la figure 4, la liaison mécanique 61 comprend un barreau 62 solidarisé à la grille 40 et au moyen d'obturation 41. Un coulissement de la grille 40 entraîne donc un coulissement du moyen d'obturation 41.

La figure 4 fait de plus apparaître des premier et deuxième moyens de guidage 32, 42 respectivement de la grille 40 et du moyen d'obturation 41. Ces premier et deuxième moyens de guidage 32, 42 peuvent être des rails guidant la translation de la grille 40 et du moyen d'obturation 41 selon l'axe dynamique AX1.

En outre, la figure 4 présente un organe optionnel pour d'une part éviter des déplacements indus de la grille 40, et d'autre part permettre à cette grille de revenir dans sa position initiale, à savoir sa position en l'absence de colmatage, suite à une translation de ladite grille 40.

Dès lors, l'entrée d'air 10 possède un moyen d'amortissement 80.

Ce moyen d'amortissement 80 peut être un amortisseur fixé à la paroi latérale de l'entrée d'air, et plus particulièrement un amortisseur muni d'un ressort taré. Néanmoins, il est envisageable d'utiliser tout type d'amortisseur, par exemple muni d'organes en élastomère, des amortisseurs hydrauliques, pneumatiques ou en encore électriques.

On note qu'il est possible d'agencer en série une pluralité d'amortisseurs deux amortisseurs distincts ayant des raideurs distinctes par exemple.

De plus, on peut prévoir un moyen d'ajustement de la raideur du moyen d'amortissement pour régler, au sol ou encore en temps réel en vol, la raideur de ce moyen d'amortissement en fonction de paramètres prédéterminés du type phase de vol ou encore par exemple selon la vitesse de déplacement ou selon l'accélération de la grille par rapport au conduit d'entrée dynamique. Lorsque le moyen d'amortissement comporte un amortisseur pneumatique, on peut utiliser la pression d'un gaz prélevé sur le turbomoteur 2 alimenté par l'entrée d'air.

Par ailleurs, l'entrée d'air est pourvue d'un capteur de position 70 permettant de générer une information relative à la position de la grille 40. Ce capteur de position 70 est par exemple associé à un rail du premier moyen de guidage 32.

Lorsque l'entrée d'air est munie d'un moyen d'amortissement muni d'une partie mobile, un piston par exemple, le capteur de position peut mesurer la position dudit piston de fait représentative de la position de la grille 40.

Si le moyen d'amortissement met en oeuvre des fluides, le capteur de position peut surveiller la circulation de ces fluides ou leur pression.

Selon le deuxième exemple de la figure 5, la liaison mécanique 61 comprend non seulement un barreau 62 solidaire la grille 40 mais aussi un guignol 63 en forme de L apte à effectuer une rotation autour d'un axe 64.

Une translation de la grille 40 génère alors un déplacement de type rotation du moyen d'obturation.

On note que si l'entrée d'air 10 est pourvue d'une pluralité d'entrées latérales, les deux exemples précédents sont cumulables. Ainsi, un premier moyen d'obturation peut être relié à la grille par un moyen de déplacement selon le premier exemple de la figure 4 alors qu'un deuxième moyen d'obturation peut être relié à la grille par un moyen de déplacement selon le deuxième exemple de la figure 5.

En référence à la figure 6, selon un deuxième mode de réalisation électrique, le moyen de déplacement 60 comporte un premier processeur 62 et un moteur 64 de déplacement.

Le premier processeur 62 reçoit une information relative à la position de la grille 40 dans le conduit d'entrée dynamique 30. Ce premier processeur 62 fait appel à sa mémoire, ou à une mémoire annexe afin de déterminer la position du moyen d'obturation 41 à atteindre. Ladite mémoire peut ainsi stocker une loi prédéterminée donnant la position du moyen d'obturation 41 en fonction de la position de la grille 40.

Par suite, le premier processeur 62 commande le moteur 64 de déplacement qui déplace de manière adéquate le moyen d'obturation 41, en mettant en mouvement une vis sans fin par exemple.

Indépendamment du mode de réalisation, l'entrée d'air 10 peut être munie d'un moyen de gestion 63, tel qu'un deuxième processeur muni d'une mémoire ou faisant appel à une mémoire externe, apte à accomplir des actions diverses en fonction d'une information transmise par le capteur de position relative à la position de la grille 40. Parmi ces actions, le moyen de gestion peut contrôler le premier moyen de chauffage 71 de la grille 40 en fonction de ladite information, contrôler un deuxième moyen de chauffage 72 du premier et/ ou deuxième moyen de guidage 32, 42 en fonction de ladite information, déterminer un niveau de colmatage de la grille 40 en fonction de ladite information et signaler ce niveau de colmatage à un pilote de l'aéronef, envoyer ladite information à un premier calculateur 73 pour modifier des profils de mission en temps réel en vol en fonction du niveau de colmatage de la grille 40, envoyer ladite information à un deuxième calculateur 74 pour ajuster la puissance fournie par le turbomoteur 2 en fonction du niveau de colmatage de la grille 40.

On note que le moyen de gestion 63 et le premier processeur 62 peuvent être obtenus à l'aide d'un seul et même processeur.

Enfin, la figure 6 présente un moyen d'amortissement 80 de la grille muni d'un moyen d'ajustement 81 interposé entre une prise de gaz sous pression 82 du turbomoteur 2 et ledit moyen d'amortissement 80.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Entrée d'air (10) d'un turbomoteur (2) d'aéronef (1) comportant un conduit d'acheminement (20) d'air délimité par une paroi latérale (21), ledit conduit d'acheminement (20) d'air étant prolongé par un conduit d'entrée dynamique (30), ledit conduit d'entrée dynamique (30) s'étendant selon un axe dynamique (AX1) dudit conduit d'acheminement (20) vers une section de passage frontale (31) par laquelle un vent apparent (4) peut pénétrer dans ladite entrée d'air (10), ledit axe dynamique (AX1) étant apte à être sensiblement parallèle à un axe longitudinal (AX0) dudit aéronef, ledit conduit d'entrée dynamique (30) étant pourvu d'une grille (40) de protection contre l'ingestion de corps extérieurs,
**caractérisée en ce que**, ladite grille (40) étant apte à effectuer une translation selon ledit axe dynamique (AX1) par rapport à ladite section de passage frontale (31), ladite entrée d'air (10) comporte au moins une entrée latérale (50) ménagée dans ladite paroi latérale (21) et un moyen d'obturation (41) de ladite entrée latérale (50) mobile par rapport à cette entrée latérale (50), ladite entrée d'air (10) comportant un moyen de déplacement (60) commandé par ladite translation de la grille (40) pour requérir un déplacement dudit moyen d'obturation (41) par rapport à ladite entrée latérale (50).

2. Entrée d'air selon la revendication 1,
**caractérisé en ce que**, ladite entrée latérale (50) définissant une section de passage latérale (51) apte à laisser pénétrer de l'air à l'intérieur dudit conduit d'acheminement (20) à un débit d'air donné, ledit moyen de déplacement (60) déplace ledit moyen d'obturation (41) pour ajuster une surface couverte par ladite section de passage latérale (51) afin de contrôler le débit d'air traversant ladite entrée latérale (50) en fonction du colmatage de ladite grille (40), ledit débit d'air étant maintenu entre un débit d'air nul et un débit d'air maximal prédéterminé.

3. Entrée d'air selon l'une quelconque des revendications 1 à 2,
**caractérisé en ce que**, ladite entrée d'air (10) comporte un premier moyen de guidage (32) en translation de ladite grille (40) selon ledit axe dynamique (AX1) dans ledit conduit d'entrée (30).

4. Entrée d'air selon l'une quelconque des revendications 1 à 3,
**caractérisé en ce que**, ledit moyen d'obturation (41) étant apte à se déplacer par rapport à ladite entrée latérale (50), ladite entrée d'air (10) comporte un deuxième moyen de guidage (42) dudit moyen d'obturation (41).

5. Entrée d'air selon l'une quelconque des revendications 1 à 4,
**caractérisé en ce que** ledit moyen de déplacement (60) comporte une liaison mécanique (61) reliant ladite grille (40) audit moyen d'obturation (41).

6. Entrée d'air selon l'une quelconque des revendications 1 à 5,
**caractérisé en ce qu'**elle comporte un capteur de position (70) apte à envoyer une information relative à la position de ladite grille (40) dans ledit conduit d'entrée dynamique (30).

7. Entrée d'air selon l'une quelconque des revendications 1 à 6,
**caractérisé en ce que**, ladite entrée d'air (10) comportant un capteur de position (70) apte à envoyer une information relative à la position de ladite grille (40) dans ledit conduit d'entrée dynamique (30), ledit moyen de déplacement (60) comporte un premier processeur (62) recevant ladite information ainsi qu'un moteur (64) de déplacement apte à déplacer ledit moyen d'obturation (41), ledit premier processeur (62) ajustant la position dudit moyen d'obturation (41) par rapport à l'entrée latérale (50) en commandant ledit moteur (64) de déplacement en fonction de ladite information.

8. Entrée d'air selon l'une quelconque des revendications 1 à 7,
**caractérisé en ce que**, ladite entrée d'air (10) comportant un capteur de position (70) apte à envoyer une information relative à la position de ladite grille (40) dans ledit conduit d'entrée dynamique (30), cette entrée d'air (10) est pourvue d'un moyen de gestion (63) qui accomplit au moins une des actions suivantes :
- ladite grille (40) étant chauffée par un premier moyen de chauffage (71), ledit moyen de gestion (63) contrôle ledit premier moyen de chauffage (71) en fonction de ladite information,
- la grille (40) étant guidée par un premier moyen de guidage (32) et/ou le moyen d'obturation (41) étant guidé par un deuxième moyen de guidage (42), un deuxième moyen de chauffage (72) chauffant ledit premier moyen de guidage (32) et/ou ledit deuxième moyen de guidage (42), ledit moyen de gestion (63) contrôle ledit deuxième moyen de chauffage (72) en fonction de ladite information,
- ledit moyen de gestion (63) détermine un niveau de colmatage de la grille (40) en fonction de ladite information, et est apte à signaler ledit niveau de colmatage à un pilote dudit aéronef,
- des profils de mission étant enregistrés dans un premier calculateur (73) dudit aéronef (1), ledit moyen de gestion (63) est apte à envoyer ladite information audit premier calculateur (73) pour modifier lesdits profils en temps réel en vol en fonction du niveau de colmatage de la grille (40),
- un deuxième calculateur (74) déterminant une puissance donnée que doit délivrer ledit turbomoteur (2) à un régime donné, ledit moyen de gestion (63) est apte à envoyer ladite information audit deuxième calculateur (74) pour ajuster ladite puissance en fonction du niveau de colmatage de la grille (40).

9. Entrée d'air selon l'une quelconque des revendications 1 à 8,
**caractérisé en ce qu'**elle comporte au moins un moyen d'amortissement (80) de ladite translation de la grille (40).

10. Entrée d'air selon l'une quelconque des revendications 1 à 9,
**caractérisé en ce qu'**elle comporte un premier et un deuxième moyens d'amortissement (80) ayant une première et une deuxième raideurs distinctes.

11. Entrée d'air selon l'une quelconque des revendications 9 à 10,
**caractérisé en ce qu'**elle comporte un moyen d'ajustement (81) de la raideur d'au moins un moyen d'amortissement (80) en fonction de la phase de vol et/ou lorsqu'un corps percute la grille (40) avec une force prédéterminée.

12. Entrée d'air selon l'une quelconque des revendications 1 à 11,
**caractérisé en ce qu'**elle comporte un élément déviateur (82) sur ladite paroi latérale (21) en amont de ladite entrée latérale (50) apte à dévier un vent apparent (4).

13. Aéronef (1) muni d'un turbomoteur (2),
**caractérisé en ce qu'**il comporte une entrée d'air (10) selon l'une quelconque des revendications précédentes pour alimenter ledit turbomoteur (2) avec de l'air.

14. Procédé pour optimiser le fonctionnement d'un turbomoteur (2) d'un aéronef (1) à l'aide d'une entrée d'air (10) comportant un conduit d'acheminement (20) d'air délimité par une paroi latérale (21), ledit conduit d'acheminement (20) d'air étant prolongé par un conduit d'entrée dynamique (30), ledit conduit d'entrée dynamique (30) s'étendant selon un axe dynamique (AX1) dudit conduit d'acheminement (20) vers une section de passage frontale (31) par laquelle un vent apparent (4) peut pénétrer dans ladite entrée d'air (10), ledit axe dynamique (AX1) étant apte à être sensiblement parallèle à un axe longitudinal (AX0) dudit aéronef, ledit conduit d'entrée dynamique (30) étant pourvu d'une grille (40) de protection contre l'ingestion de corps extérieurs,
au cours duquel, ladite grille (40) étant apte à effectuer une translation selon ledit axe dynamique (AX1) par rapport à ladite section de passage frontale (31) suite à un colmatage de la grille (40), ladite entrée d'air (10) comportant au moins une entrée latérale (50) ménagée dans ladite paroi latérale (21) et un moyen d'obturation (41) de ladite entrée latérale (50) mobile par rapport à cette entrée latérale (50), on déplace ledit moyen d'obturation (41) par rapport à ladite entrée latérale (50) proportionnellement à ladite translation.

15. Procédé selon la revendication 14,
**caractérisé en ce que** l'on accomplit au moins une des actions suivantes :
- ladite grille (40) étant chauffée par un premier moyen de chauffage (71), on contrôle ledit premier moyen de chauffage (71) en fonction de la position de ladite grille (40) dans ledit conduit d'entrée dynamique (30),
- la grille (40) étant guidée par un premier moyen de guidage (32) et/ ou le moyen d'obturation (41) étant guidé par un deuxième moyen de guidage (42), un deuxième moyen de chauffage (72) chauffant ledit premier moyen de guidage (32) et/ou ledit deuxième moyen de guidage (42), on contrôle ledit deuxième moyen de chauffage (72) en fonction de la position de ladite grille (40) dans ledit conduit d'entrée dynamique (30),
- on détermine un niveau de colmatage de la grille en fonction de la position de ladite grille (40) dans ledit conduit d'entrée dynamique (30) et on fournit ce niveau de colmatage à un pilote dudit aéronef,
- des profils de mission étant enregistrés dans un premier calculateur (73) dudit aéronef (1), on envoie la position de ladite grille (40) dans ledit conduit d'entrée dynamique (30) audit premier calculateur (73) pour modifier lesdits profils en temps réel en vol en fonction du niveau de colmatage de la grille (40),
- un deuxième calculateur (74) déterminant une puissance donnée que doit délivrer ledit turbomoteur à un régime donné, on envoie la position de ladite grille (40) dans ledit conduit d'entrée dynamique (30) au deuxième calculateur pour ajuster ladite puissance en fonction du niveau de colmatage de la grille (40).

## Claims

1. Air inlet (10) for a turbine engine (2) of an aircraft (1), including an air delivery duct (20) defined by a side wall (21), said air delivery duct (20) being extended by a dynamic inlet duct (30), said dynamic inlet duct (30) extending along a dynamic axis (AX1) of said delivery duct (20) towards a front flow section (31) through which an apparent wind (4) can penetrate into said air inlet (10), said dynamic axis (AX1) being suitable for being substantially parallel to a longitudinal axis (AX0) of said aircraft, said dynamic inlet duct (30) being provided with a grid (40) for protection against ingestion of foreign bodies,
**characterised in that** said grid (40) is suitable for moving in translation along said dynamic axis (AX1) relative to said front flow section (31), and said air inlet includes at least one lateral inlet (50) formed in said side wall (21) and cover means (41) for covering said lateral inlet (50) that are movable relative to said lateral inlet (50), said air inlet (10) including movement means (60) controlled by said movement in translation of the grid (40) to bring about movement of said cover means (41) relative to said lateral inlet (50).

2. Air inlet according to Claim 1,
**characterised in that** said lateral inlet (50) defines a lateral flow section (51) suitable for allowing air to penetrate into the inside of said delivery duct (20) at a given air flow rate, and said movement means (60) moves said cover means (41) to adjust an area covered by said lateral flow section (51) so as to control the flow rate of air passing through said lateral inlet (50) as a function of the clogging of said grid (40), said air flow rate being maintained between a zero air flow rate and a predetermined maximum air flow rate.

3. Air inlet according to any one of Claims 1 to 2,
**characterised in that** said air inlet (10) includes first guide means (32) for guiding movement in translation of said grid (40) along said dynamic axis (AX1) in said inlet duct (30).

4. Air inlet according to any one of Claims 1 to 3,
**characterised in that** said cover means (41) are suitable for moving relative to said lateral inlet (50), and said air inlet (10) includes second guide means (42) for guiding said cover means (41).

5. Air inlet according to any one of Claims 1 to 4,
**characterised in that** said movement means (60) comprise a mechanical connection (61) connecting said grid (40) to said cover means (41).

6. Air inlet according to any one of Claims 1 to 5,
**characterised in that** it includes a position sensor (70) suitable for sending information relating to the position of said grid (40) in said dynamic inlet duct (30).

7. Air inlet according to any one of Claims 1 to 6,
**characterised in that** said air inlet (10) includes a position sensor (70) suitable for sending information relating to the position of said grid (40) in said dynamic inlet duct (30), and said movement means (60) include a first processor (62) receiving said information and a movement motor (64) suitable for moving said cover means (41), said first processor (62) adjusting the position of said cover means (41) relative to the lateral inlet (50) by controlling said movement motor (64) as a function of said information.

8. Air inlet according to any one of Claims 1 to 7,
**characterised in that** said air inlet (10) includes a position sensor (70) suitable for sending information relating to the position of said grid (40) in said dynamic inlet duct (30), and said air inlet (10) is provided with management means (63) which perform at least one of the following actions:
- said grid (40) is heated by first heater means (71) and said management means (63) control said first heater means (71) as a function of said information;
- the grid (40) is guided by first guide means (32) and/or the cover means (41) are guided by second guide means (42), second heater means (72) heating said first guide means (32) and/or said second guide means (42), and said management means (63) control said second heater means (72) as a function of said information;
- said management means (63) determine a clogging level of the grid (40) as a function of said information and are suitable for informing a pilot of said aircraft about said clogging level;
- mission profiles are stored in a first computer (73) of said aircraft (1) and said management means (63) are suitable for sending said information to said first computer (73) in order to modify said profiles in real time in flight as a function of the clogging level of the grid (40); and
- a second computer (74) determines a given power that is to be delivered by said turbine engine (2) at a given speed, and said management means (63) are suitable for sending said information to said second computer (74) to adjust said power as a function of the clogging level of the grid (40).

9. Air inlet according to any one of Claims 1 to 8,
**characterised in that** it includes at least one damper means (80) for damping said movement in translation of the grid (40).

10. Air inlet according to any one of Claims 1 to 9,
**characterised in that** it includes first and second damper means (80) having first and second distinct stiffnesses.

11. Air inlet according to any one of Claims 9 to 10,
**characterised in that** it includes adjustment means (81) for adjusting the stiffness of at least one damper means (80) as a function of the stage of flight and/or when a body strikes the grid (40) with a predetermined force.

12. Air inlet according to any one of Claims 1 to 11,
**characterised in that** it includes a deflector element (82) on said side wall (21) upstream from said lateral inlet (50) and suitable for deflecting an apparent wind (4).

13. Aircraft (1) provided with a turbine engine (2),
**characterised in that** it includes an air inlet (10) according to any one of the preceding claims for feeding air to said turbine engine (2).

14. Method of optimising the operation of a turbine engine (2) of an aircraft (1) with the help of an air inlet (10) including an air delivery duct (20) defined by a side wall (21), said air delivery duct (20) being extended by a dynamic inlet duct (30), said dynamic inlet duct (30) extending along a dynamic axis (AX1) of said delivery duct (20) towards a front flow section (31) through which an apparent wind (4) can penetrate into said air inlet (10), said dynamic axis (AX1) being suitable for being substantially parallel to a longitudinal axis (AX0) of said aircraft, said dynamic inlet duct (30) being provided with a grid (40) for protection against ingestion of foreign bodies,
in which method said grid (40) is suitable for moving in translation along said dynamic axis (AX1) relative to said front flow section (31) as a result of the grid (40) becoming clogged, said air inlet (10) including at least one lateral inlet (50) formed in said side wall (21) and cover means (41) for covering said lateral inlet (50), the cover means (41) being movable relative to said lateral inlet (50), and said cover means (41) are moved relative to said lateral inlet (50) in proportion to said movement in translation.

15. Method according to Claim 14,
**characterised in that** at least one of the following actions is performed:
- said grid (40) is heated by first heater means (71) and said first heater means (71) are controlled as a function of the position of said grid (40) in said dynamic inlet duct (30);
- the grid (40) is guided by first guide means (32) and/or the cover means (41) are guided by second guide means (42), second heater means (72) heating said first guide means (32) and/or said second guide means (42), and said second heater means (72) are controlled as a function of the position of said grid (40) in said dynamic inlet duct (30);
- a clogging level of the grid (40) is determined as a function of the position of said grid (40) in said dynamic inlet duct (30) and said clogging level is supplied to a pilot of said aircraft;
- mission profiles are stored in a first computer (73) of said aircraft (1) and the position of said grid (40) in said dynamic inlet duct (30) is sent to said first computer (73) in order to modify said profiles in real time in flight as a function of the clogging level of the grid (40);
- a second computer (74) determines a given power that is to be delivered by said turbine engine at a given speed, and the position of said grid (40) in said dynamic inlet duct (30) is sent to the second computer to adjust said power as a function of the clogging level of the grid (40).

## Patentansprüche

1. Lufteinlass (10) eines Turbomotors (2) eines Luftfahrzeugs (1) mit einer Luftzufuhrleitung (20), die durch eine Seitenwand (21) begrenzt ist, wobei die Lufteinlassleitung (20) durch eine bewegliche Eingangsleitung (30) verlängert ist, wobei die bewegliche Eingangsleitung (30) sich entlang einer Bewegungsachse (AX1) der Luftzufuhrleitung (20) bis zu einem stirnseitigen Eintrittsbereich (31) erstreckt, durch den ein auftretender Luftstrom (4) in den Lufteinlass (10) eindringen kann, wobei die Bewegungsachse (AX1) im Wesentlichen parallel zur Längsachse (AX0) des Luftfahrzeugs sein kann, und die bewegliche Eintrittsleitung (30) mit einem Gitter (40) zum Schutz gegen das Eindringen von Körpern von außen versehen ist,
**dadurch gekennzeichnet, dass** das Gitter (40) eine Translationsbewegung entlang der Bewegungsachse (AX1) relativ zu dem stirnseitigen Eintrittsbereich (31) ausführen kann, wobei der Lufteinlass (10) mindestens eine seitliche Eintrittsöffnung (50) aufweist, die in der Seitenwand (21) eingearbeitet ist, und ein Verschlussorgan (41) der seitlichen Eintrittsöffnung (50), welches relativ zu der seitlichen Eintrittsöffnung (50) beweglich ist, wobei der Lufteinlass (10) ein Verschiebemittel (60) aufweist, welches durch die Verschiebung des Gitters (40) gesteuert wird, um eine Verschiebung des Verschlussorgans (41) relativ zu der seitlichen Eintrittsöffnung (50) zu bewirken.

2. Lufteinlass nach Anspruch 1,
**dadurch gekennzeichnet, dass** die seitliche Einlassöffnung (50) einen seitlichen Durchgangsquerschnitt (51) definiert, der es ermöglicht, Luft mit einem vorgegebenen Durchsatz in das Innere der Zufuhrleitung (20) eindringen zu lassen, wobei das Verschiebemittel (60) das Verschlussorgan (41) bewegt, um eine Fläche des seitlichen Durchgangsquerschnitts (51) zu justieren, um den Luftdurchsatz durch die seitliche Eintrittsöffnung (50) in Abhängigkeit von der Verstopfung des Gitters (40) zu steuern, wobei der Luftdurchsatz eingestellt wird zwischen einem Wert Null und einem vorbestimmten maximalen Luftdurchsatz.

3. Lufteinlass nach einem der Ansprüche 1 oder 2,
**dadurch gekennzeichnet, dass** der Lufteinlass (10) ein erstes Führungsmittel (32) für die Verschiebung des Gitters (40) entlang der Bewegungsachse (AX1) in der Eintrittsleitung (30) aufweist.

4. Lufteinlass nach einem der Ansprüche 1 bis 3,
**dadurch gekennzeichnet, dass** das Verschlussorgan (41) sich relativ zu der seitlichen Einlassöffnung (50) bewegen kann, wobei der Lufteinlass (10) ein zweites Führungsmittel (42) für das Verschlussorgan (41) aufweist.

5. Lufteinlass nach einem der Ansprüche 1 bis 4,
**dadurch gekennzeichnet, dass** das Verschiebemittel (60) eine mechanische Verbindung (61) aufweist, die das Gitter (40) mit dem Verschlussorgan (41) verbindet.

6. Lufteinlass nach einem der Ansprüche 1 bis 5,
**dadurch gekennzeichnet, dass** er einen Positionsdetektor (70) aufweist, der eine Information bezüglich der Position des Gitters (40) in der beweglichen Eingangsleitung (30) senden kann.

7. Lufteinlass nach einem der Ansprüche 1 bis 6,
**dadurch gekennzeichnet, dass** der Lufteinlass (10) einen Positionsdetektor (70) aufweist, der eine Information bezüglich der Position des Gitters (40) in der beweglichen Eingangsleitung (30) senden kann, wobei das Verschiebemittel (60) einen ersten Prozessor (62) aufweist, der diese Information empfängt, sowie einen Antriebsmotor (64) zum Verschieben des Verschlussorgans (41), wobei der erste Prozessor (62) die Position des Verschlussorgans (41) relativ zur seitlichen Eintrittsöffnung (50) justiert, indem er den Antriebsmotor (64) in Abhängigkeit von dieser Information steuert.

8. Lufteinlass nach einem der Ansprüche 1 bis 7,
**dadurch gekennzeichnet, dass** der Lufteinlass (10) einen Positionsdetektor (70) aufweist, der eine Information bezüglich der Position des Gitters (40) in der beweglichen Eintrittsleitung (30) senden kann, wobei dieser Lufteinlass (10) mit einem Verarbeitungsmittel (63) versehen ist, das mindestens einen der folgenden Prozesse ausführt:
- das Gitter (40) wird durch ein erstes Heizmittel (71) aufgeheizt, wobei das Verarbeitungsmittel (63) das erste Heizmittel (71) in Abhängigkeit von der besagten Information steuert,
- das Gitter (40) wird durch ein erstes Führungsorgan (32) geführt und/oder das Verschlussorgan (41) wird durch ein zweites Führungsmittel (42) gesteuert, ein zweites Heizmittel (72) heizt das erste Führungsmittel (32) und/oder das zweite Führungsmittel (42), wobei das Verarbeitungsmittel (63) das zweite Heizmittel (72) in Abhängigkeit von der besagten Information steuert,
- das Verarbeitungsmittel (63) bestimmt einen Verstopfungsgrad des Gitters (40) in Abhängigkeit von der Information und kann den Verstopfungsgrad an den Piloten des Luftfahrzeugs melden,
- Daten einer Mission sind in einem ersten Rechner (73) des Luftfahrzeugs (1) gespeichert, und das Verarbeitungsmittel (63) kann die Information an den ersten Rechner (73) weitergeben, um die Daten in Echtzeit während des Fluges in Abhängigkeit von dem Grad der Verstopfung des Gitters (40) zu verändern,
- ein zweiter Rechner (74) bestimmt eine vorgegeben Soll-Leistung des Turbomotors (2) unter vorgegebenen Betriebsbedingungen, wobei das Verarbeitungsmittel (63) die Information an den zweiten Rechner (74) weitergeben kann, um die Leistung in Abhängigkeit von dem Verstopfungsgrad des Gitters (40) einzujustieren.

9. Lufteinlass nach einem der Ansprüche 1 bis 8,
**dadurch gekennzeichnet, dass** er mindestens einen Dämpfer (80) für die Translationsbewegung des Gitters (40) aufweist.

10. Lufteinlass nach einem der Ansprüche 1 bis 9,
**dadurch gekennzeichnet, dass** er einen ersten und einen zweiten Dämpfer (80) aufweist mit unterschiedlichen ersten und zweiten Härtegraden.

11. Lufteinlass nach einem der Ansprüche 9 bis 10,
**dadurch gekennzeichnet, dass** er Einstellmittel (81) für den Härtegrad mindestens eines Dämpfers (80) in Abhängigkeit von der Flugphase und/oder in Abhängigkeit von dem Aufschlagen eines Körpers auf das Gitter (40) mit einer vorbestimmten Kraft aufweist.

12. Lufteinlass nach einem der Ansprüche 1 bis 11,
**dadurch gekennzeichnet, dass** er auf der Seitenwand (21) stromauf bezüglich der seitlichen Eintrittsöffnung (50) ein Umlenkelement (82) aufweist, welches einen auftretenden Luftstrom (4) umlenken kann.

13. Luftfahrzeug (1) mit einem Turbomotor (2),
**dadurch gekennzeichnet, dass** es einen Lufteinlass (10) nach einem der vorstehenden Ansprüche zur Speisung des Turbomotors (2) mit Luft aufweist.

14. Verfahren zur Optimierung des Betriebs eines Turbomotors (2) eines Luftfahrzeugs (1) mit Hilfe eines Lufteinlasses (10), der eine durch eine Seitenwand (21) begrenzte Luftzufuhrleitung (20) aufweist, wobei die Luftzufuhrleitung (20) durch eine bewegliche Einlassleitung (30) verlängert ist, und die bewegliche Lufteinlassleitung (30) sich entlang einer Bewegungsachse (AX1) der Zufuhrleitung (20) bis zu einem stirnseitigen Durchgangsbereich (31) erstreckt, durch den eine anliegende Luftströmung (4) in den Lufteinlass (10) eindringen kann, wobei die Bewegungsachse (AX1) im Wesentlichen parallel zu der Längsachse (AX0) des Luftfahrzeugs sein kann, und die bewegliche Einlassleitung (30) mit einem Gitter (40) zum Schutz gegen das Eindringen von Körpern von außen versehen ist, wobei bei dem Verfahren das Gitter (40) eine Translationsbewegung entlang der Bewegungsachse (AX1) relativ zu dem stirnseitigen Einlassbereich (31) nach einer Verstopfung des Gitters (40) durchführen kann, wobei der Lufteinlass (10) mindestens eine seitliche Einlassöffnung (50) aufweist, die in der Seitenwand (21) eingearbeitet ist, und ein Verschlussorgan (41) für die seitliche Eintrittsöffnung (50), welches bezüglich dieser seitlichen Eintrittsöffnung (50) beweglich ist, wobei das Verschlussorgan (41) relativ zu der seitlichen Eintrittsöffnung (50) proportional zu der Translationsbewegung verschoben wird.

15. Verfahren nach Anspruch 14,
**dadurch gekennzeichnet, dass** mindestens einer der folgenden Verfahrensschritte ausgeführt wird:
- wenn das Gitter (40) durch ein erstes Heizmittel (71) geheizt wird, wird das erste Heizmittel (71) in Abhängigkeit von der Position des Gitters (40) in der beweglichen Eintrittsleitung (30) gesteuert,
- wenn das Gitter (40) durch ein erstes Führungsorgan (32) geführt und/oder das Verschlussorgan (41) durch ein zweites Führungsmittel (42) geführt wird und wenn ein zweites Heizmittel (72) das erste Führungsmittel (32) und/oder das zweite Führungsmittel (42) heizt, steuert man das zweite Heizmittel (72) in Abhängigkeit von der Position des Gitters (40) in der beweglichen Eintrittsleitung (30),
- man bestimmt den Grad der Verstopfung des Gitters in Abhängigkeit von der Position des Gitters (40) in der beweglichen Eintrittsleitung (30) und informiert einen Piloten des Luftfahrzeugs über diesen Verstopfungsgrad,
- Daten einer Mission sind in einem ersten Rechner (73) des Luftfahrzeugs (1) gespeichert und die Position des Gitters (40) in der beweglichen Eintrittsleitung (30) wird an den ersten Rechner (73) weitergegeben, um die Daten in Echtzeit während des Fluges in Abhängigkeit von dem Verstopfungsgrad des Gitters (40) zu modifizieren,
- ein zweiter Rechner (74) bestimmt eine gegebene Soll-Leistung des Turbomotors bei vorgegebenen Betriebsbedingungen, und die Position des Gitters (40) in der beweglichen Eintrittsleitung (30) wird an einen zweiten Rechner weitergegeben, um die Leistung in Abhängigkeit von dem Verstopfungsgrad des Gitters (40) einzujustieren.
